# EUROPEAN PATENT APPLICATION

(11) **EP 3 866 538 A1**
(43) Date of publication of application: **18.08.2021**
(21) Application number: 19880833.9
(22) Date of filing: 30.10.2019
(51) Int. Cl.: H04W 72/04

(54) **METHOD AND APPARATUS FOR TRANSMITTING DATA**

(30) Priority: 02.11.2018 CN 201811303641
(71) Applicant: Huawei Technologies Co., Ltd., Longgang Shenzhen, Guangdong 518129 (CN)
(72) Inventor: HUANG, Qufang, Shenzhen, Guangdong 518129 (CN); LOU, Chong, Shenzhen, Guangdong 518129 (CN); FAN, Qiang, Shenzhen, Guangdong 518129 (CN)
(74) Representative: Gill Jennings & Every LLP
(86) International application number: PCT/CN2019/114227
(87) International publication number: WO 2020/088490

(57) **Abstract**

According to embodiments of this application, a terminal device may indicate, to a network device, that at least two uplink grants are required for a to-be-sent data packet; or a terminal device sends, to a network device, indication information used to determine that at least two uplink grants are required for a to-be-sent data packet, so that the network device sends the at least two uplink grants for the to-be-sent data packet. Then, the terminal device assembles the to-be-sent data packet into at least two transport blocks, and sends the at least two transport blocks to the network device by using uplink resources indicated by the at least two uplink grants, to reduce a probability that the terminal device completely transmits the to-be-sent data packet at a time, thereby reducing continuous packet loss. This prevents a receiver manipulator from entering a deadlock state.

## Description

This application claims priority to Chinese Patent Application No. 201811303641.9, filed with the Chinese Patent Office on November 2, 2018 and entitled "DATA TRANSMISSION METHOD AND APPARATUS", which is incorporated herein by reference in its entirety.

### TECHNICAL FIELD

This application relates to the communications field, and more specifically, to a data transmission method and apparatus in the communications field.

### BACKGROUND

An industrial control data packet usually appears periodically. After a wireless communications technology is applied to industrial control, when a packet loss occurs in a wireless communications system, a data packet cannot be transmitted on time. To ensure security of data transmission, the concept of a "survival time (survival time)" is introduced for an industrial manipulator. That is, when no data packet is received within a period of time, the manipulator starts a survival timer (survival timer). When the timer expires, the manipulator enters a deadlock state to prevent a security incident.

In order to prevent production equipment from entering a deadlock state, a wireless communications network needs to reduce continuous packet loss as much as possible. Therefore, how to reduce continuous packet loss in a wireless communications network is a problem to be resolved urgently.

### SUMMARY

This application provides a data transmission method and apparatus, to reduce continuous packet loss in a wireless communications system or prevent production equipment from entering a deadlock state.

According to a first aspect, a data transmission method is provided. The method includes:
A terminal device sends first information to a network device, where the first information is used to indicate that at least two uplink grants are required for a to-be-sent data packet of the terminal device, or the first information is used to determine that at least two uplink grants are required for a to-be-sent data packet of the terminal device.

The terminal device receives the at least two uplink grants from the network device.

The terminal device assembles the to-be-sent data packet into at least two transport blocks, and separately sends the at least two transport blocks to the network device by using uplink resources indicated by the at least two uplink grants.

The at least two transport blocks are in a one-to-one correspondence with the uplink resources indicated by the at least two grants. To be specific, each transport block corresponds to an uplink resource indicated by one uplink grant, and is transmitted by using the corresponding uplink resource.

Therefore, according to this embodiment of this application, the terminal device may indicate, to the network device, the at least two uplink grants required for the to-be-sent data packet; or the terminal device sends, to the network device, indication information used to determine the at least two uplink grants required for the to-be-sent data packet, so that the network device sends the at least two uplink grants for the to-be-sent data packet. Then, the terminal device assembles the to-be-sent data packet into the at least two transport blocks, and sends the at least two transport blocks to the network device by using the uplink resources indicated by the at least two uplink grants, to reduce a probability that the terminal device completely transmits the to-be-sent data packet at a time, thereby reducing continuous packet loss.

With reference to the first aspect, in some implementations of the first aspect, that a terminal device sends first information to a network device includes:
The terminal device sends at least two buffer status reports BSRs to the network device, where each BSR is used to indicate a data amount of a to-be-sent data packet corresponding to the BSR.

It should be noted that, herein, that the terminal device sends the at least two BSRs to the network device means that the terminal device sends at least two BSRs to the network device when a data amount in a buffer does not change after BSR triggering. In addition, after a first BSR in the at least two BSRs is sent, if the to-be-sent data packet in the buffer is not completely reported in the BSR when BSR sending is triggered, a BSR triggering state is retained, and the BSR triggering state ends only when the to-be-sent data packet in the buffer is completely reported in the BSR.

Therefore, according to this embodiment of this application, if the data amount in the buffer does not change after BSR triggering, the terminal device may send the at least two BSRs to the network device, to notify the network device that at least two uplink grants are required, so that the network device sends the at least two uplink grants for the to-be-sent data packet.

Optionally, in this embodiment of this application, the terminal device may determine, based on quantity information and/or time information of the to-be-sent data packet in the buffer, a quantity of BSRs to be sent.

Herein, the quantity information may indicate a quantity of to-be-sent data packets, and the time information may include an arrival time, a validity time, a survival time, or other time information of the to-be-sent data packet. This is not limited in this embodiment of this application. The arrival time of the to-be-sent data packet is a time at which the to-be-sent data packet arrives at an access layer of the terminal device, and the validity time is a time period within which the data packet needs to be transmitted to a receiver. The survival time is a time period within which if the receiver does not receive any packet, the receiver enters a deadlock state.

With reference to the first aspect, in some implementations of the first aspect, that a terminal device sends first information to a network device includes:
The terminal device sends first indication information to the network device, where the first indication information is used to indicate the quantity of to-be-sent data packets, and the quantity of to-be-sent data packets is used to determine that the at least two uplink grants are required for the to-be-sent data packet of the terminal device.

Therefore, according to this embodiment of this application, the terminal device may indicate the data amount of the to-be-sent data packet to the network device, so that the network device determines, based on the quantity of to-be-sent data packets, that at least two uplink grants are required for the to-be-sent data packet, and further sends the at least two uplink grants for the to-be-sent data packet.

With reference to the first aspect, in some implementations of the first aspect, the first indication information is carried in a MAC CE. Optionally, the first indication information may be carried in a BSR in a MAC CE.

When the indication information is carried in a BSR, in a possible implementation, a field may be directly added to the BSR, where the field is used to explicitly indicate a quantity of to-be-sent data packets indicated by the BSR. In another possible implementation, an LCG field in the BSR may be reused to indicate the quantity of to-be-sent data packets.

When the indication information is carried in a MAC CE, in a possible implementation, the indication information may be separately carried in the MAC CE. In other words, in this case, the MAC CE includes only the indication information.

Optionally, in this embodiment of this application, the network device may further determine, based on the quantity of to-be-sent data packets and a data pattern (pattern) of the to-be-sent data packet, a quantity of radio resources to be allocated for the to-be-sent data. Herein, the data pattern is used to indicate a transmission policy of the to-be-sent data. For example, the data pattern of the terminal device may indicate that one data packet is transmitted every 20 ms.

With reference to the first aspect, in some implementations of the first aspect, that a terminal device sends first information to a network device includes:

The terminal device sends a MAC CE to the network device, where the MAC CE includes two BSRs with same content.

In this way, when receiving the two BSRs with exactly same content, the network device may determine that at least two uplink grants are required for the to-be-sent data packet of the terminal device.

With reference to the first aspect, in some implementations of the first aspect, that a terminal device sends first information to a network device includes:
The terminal device determines a threshold, where the threshold indicates an upper limit of an amount of data transmitted by using the uplink resources.

When the terminal device requires the at least two uplink grants, the terminal device sends second indication information to the network device, where the second indication information is used to indicate that the data amount of the to-be-sent data packet is greater than or equal to the threshold.

That the network device determines that the to-be-sent data amount is greater than or equal to the threshold may specifically include two cases: One case is that the to-be-sent data amount of the terminal device is actually greater than or equal to the threshold, and the other case is that the to-be-sent data amount of the terminal device is less than the threshold but the terminal device requires two or more uplink resources. The network device can configure at least two uplink grants for the terminal device in both of the two cases.

In a possible implementation, the terminal device may send a "threshold" to the network device, to indicate that the data amount of the to-be-sent data packet is greater than the threshold. Alternatively, the terminal device may send other indication information to the network device, to indicate that the data amount of the to-be-sent data packet is greater than the threshold.

According to a second aspect, a data transmission method is provided. The method includes:
A network device receives first information from a terminal device, where the first information is used to indicate that at least two uplink grants are required for a to-be-sent data packet of the terminal device, or the first information is used to determine that at least two uplink grants are required for a to-be-sent data packet of the terminal device.

The network device sends, based on the first information, the at least two uplink grants to the terminal device.

The network device receives, by using uplink resources indicated by the at least two uplink grants, at least two transport blocks sent by the terminal device.

Therefore, according to this embodiment of this application, the terminal device may indicate, to the network device, that the at least two uplink grants are required for the to-be-sent data packet; or the terminal device sends, to the network device, indication information used to determine that the at least two uplink grants are required for the to-be-sent data packet, so that the network device sends the at least two uplink grants for the to-be-sent data packet. Then, the terminal device assembles the to-be-sent data packet into the at least two transport blocks, and sends the at least two transport blocks to the network device by using the uplink resources indicated by the at least two uplink grants, to reduce a probability that the terminal device transmits the to-be-sent data packet at a time, thereby reducing continuous packet loss.

With reference to the second aspect, in some implementations of the second aspect, that a network device receives first information from a terminal device includes:
The network device receives at least two buffer status reports BSRs from the terminal device, where each BSR is used to indicate a data amount of a to-be-sent data packet corresponding to the BSR.

That the network device sends, based on the first information, the at least two uplink grants to the terminal device includes:
The network device sends, based on the at least two BSRs, the at least two uplink grants to the terminal device.

With reference to the second aspect, in some implementations of the second aspect, that a network device receives first information from a terminal device includes:
The network device receives indication information from the terminal device, where the indication information is used to indicate a quantity of to-be-sent data packets.

That the network device sends, based on the first information, the at least two uplink grants to the terminal device includes:
The network device sends, based on the quantity of to-be-sent data packets, the at least two uplink grants to the terminal device.

With reference to the second aspect, in some implementations of the second aspect, the indication information is carried in a MAC CE.

With reference to the second aspect, in some implementations of the second aspect, that the network device sends, based on the quantity of to-be-sent data packets, the at least two uplink grants to the terminal device includes:
The network device determines, based on the quantity of to-be-sent data packets and a data pattern of the to-be-sent data, the at least two uplink grants, where the data pattern is used to indicate a transmission policy of the to-be-sent data.

With reference to the second aspect, in some implementations of the second aspect, that a network device receives first information from a terminal device includes:
The network device receives a MAC CE from the terminal device, where the MAC CE includes two BSRs with same content.

That the network device sends, based on the first information, the at least two uplink grants to the terminal device includes:
The network device sends, based on the at least two BSRs with the same content in the MAC CE, the at least two uplink grants to the terminal device.

With reference to the second aspect, in some implementations of the second aspect, that a network device receives first information from a terminal device includes:
The network device determines a threshold, where the threshold indicates an upper limit of an amount of data transmitted by using the uplink resources.

The network device receives second indication information from the terminal device, where the second indication information is used to indicate that the quantity of to-be-sent data packets is greater than or equal to the threshold.

That the network device sends, based on the first information, the at least two uplink grants to the terminal device includes:
The network device sends, based on the second indication information, the at least two uplink grants to the terminal device.

According to a third aspect, a data transmission method is provided. The method includes:
A terminal device notifies a network device of a data amount of a to-be-sent data packet.

The terminal device receives a first uplink grant from the network device.

The terminal device assembles a first data packet part of the to-be-sent data packet into a first transport block, and sends the first transport block to the network device by using an uplink resource indicated by the first uplink grant.

The terminal device notifies the network device of a data amount of a second data packet part of the to-be-sent data packet.

The terminal device receives a second uplink grant from the network device.

The terminal device assembles the second data packet part into a second transport block, and sends the second transport block to the network device by using an uplink resource indicated by the second uplink grant.

Therefore, in this embodiment of this application, when the terminal device determines that a deadlock may occur when a plurality of to-be-sent data packets are transmitted by using one transport block, the terminal device may transmit the data packets at two or more times, thereby reducing a probability that the terminal device transmits all the data packets at a time and reducing continuous packet loss.

In a possible implementation, the first data packet part is a part of the plurality of to-be-sent data packets, and the second data packet part is a part of the plurality of to-be-sent data packets. Optionally, the first data packet part is different from the second data packet part. For example, the first data packet part includes first several data packets of the plurality of to-be-sent data packets, and the second data packet part is a data packet after the first data packet part.

In another possible implementation, the first data packet part is all of the plurality of to-be-sent data packets. In addition, in this case, the terminal device may consider that a part of the plurality of to-be-sent data packets, for example, the second data packet part, is not sent. In this case, the first data packet part includes the second data packet part. Optionally, when determining that the first data packet part is successfully transmitted, the terminal device cancels sending of the second data packet part. When the terminal device has a next radio resource but has not determined that the first data packet part is successfully transmitted, the terminal device sends the second data packet part to the network device by using the next radio resource.

According to a fourth aspect, a data transmission method is provided. The method includes:
A network device obtains, from a terminal device, a data amount of a to-be-sent data packet.

The network device sends a first uplink grant to the terminal device.

The network device receives, by using a radio resource indicated by the first uplink grant, a first transport block including a first data packet part of the to-be-sent data packet.

The network device obtains, from the terminal device, a data amount of a second data packet part of the to-be-sent data packet.

The network device sends a second uplink grant to the terminal device.

The network device receives, by using a radio resource indicated by the second uplink grant, a second transport block including the second data packet part of the to-be-sent data packet.

Therefore, in this embodiment of this application, when the terminal device determines that a deadlock may occur when a plurality of to-be-sent data packets are transmitted by using one transport block, the terminal device may transmit the data packets at two or more times, thereby reducing a probability that the terminal device transmits all the data packets at a time and reducing continuous packet loss.

According to a fifth aspect, an apparatus is provided. The apparatus may be a network device, a network element or a module in a network device, a chip in a network device, or a chip in a network element or a module in a network device. The apparatus has a function of implementing the network device in any one of the first aspect to the fourth aspect or any possible implementation thereof. The function may be implemented by hardware, or may be implemented by hardware executing corresponding software. The hardware or the software includes one or more modules corresponding to the function.

In a possible design, the apparatus includes a transceiver module. Optionally, the apparatus further includes a processing module. The transceiver module may be, for example, at least one of a transceiver, a receiver, and a transmitter. The transceiver module may include a radio frequency circuit or an antenna. The processing module may be a processor. Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or other instructions. In this design, the apparatus may be a network device, or a module, a network element, or a function in a network device.

In another possible design, when the apparatus is a chip, the chip includes a transceiver module. Optionally, the chip further includes a processing module. The transceiver module may be, for example, an input/output interface, a pin, or a circuit on the chip. The processing module may be a processor. Optionally, the processing module may execute instructions in a storage module. The storage module may be a storage module in the chip, for example, a register or a cache. The storage module may alternatively be in a communications device but outside the chip, for example, a read-only memory (read-only memory, ROM), a static storage device of another type that can store static information and static instructions, or a random access memory (random access memory, RAM).

According to a sixth aspect, an apparatus is provided. The apparatus may be a terminal device, a module in a terminal device; or may be a chip in a terminal device, or a chip in a module in a terminal device. The apparatus has a function of implementing the terminal device in any one of the first aspect to the fourth aspect or any possible implementations of the first aspect to the fourth aspect. The function may be implemented by hardware, or may be implemented by hardware executing corresponding software. The hardware or the software includes one or more modules corresponding to the function.

In a possible design, the apparatus includes a transceiver module. Optionally, the apparatus further includes a processing module. The transceiver module may be, for example, at least one of a transceiver, a receiver, and a transmitter. The transceiver module may include a radio frequency circuit or an antenna. The processing module may be a processor. Optionally, the apparatus further includes a storage module, and the storage module may be, for example, a memory. When the apparatus includes the storage module, the storage module is configured to store instructions. The processing module is connected to the storage module, and the processing module may execute the instructions stored in the storage module or other instructions. In this design, the apparatus may be a terminal device, or a module or a function in a terminal device.

In another possible design, when the apparatus is a chip, the chip includes a transceiver module. Optionally, the chip further includes a processing module. The transceiver module may be, for example, an input/output interface, a pin, or a circuit on the chip. The processing module may be a processor. Optionally, the processing module may execute instructions in a storage module. The storage module may be a storage module in the chip, for example, a register or a cache. The storage module may alternatively be in a communications device but outside the chip, for example, a read-only memory (read-only memory, ROM), a static storage device of another type that can store static information and static instructions, or a random access memory (random access memory, RAM).

Any processor mentioned above may be a general-purpose central processing unit (CPU), a microprocessor, an application-specific integrated circuit (application-specific integrated circuit, ASIC), or one or more integrated circuits configured to control execution of a program for the communications method according to any one of the first aspect to the fourth aspect.

According to a seventh aspect, a computer storage medium is provided. The computer storage medium stores program code, and the program code is used to indicate instructions for performing the method according to any one of the first aspect to the fourth aspect or any possible implementation thereof.

According to an eighth aspect, a computer program product including instructions is provided. When the instructions are run on a computer, the computer is enabled to perform the method according to any one of the first aspect to the fourth aspect or any possible implementation thereof.

According to a ninth aspect, a communications system is provided. The communications system includes an apparatus and a combination of apparatuses that has functions for implementing the method according to any one of the first aspect to the fourth aspect and the possible designs thereof.

According to a tenth aspect, a processor is provided, where the processor is configured to: be coupled to a memory, and perform the method according to any one of the first aspect to the fourth aspect or any possible implementation thereof.

According to an eleventh aspect, a chip is provided. The chip includes a processor and a communications interface. The communications interface is configured to communicate with an external component or an internal component. The processor is configured to implement the method according to any one of the first to the fourth aspects or any possible implementation thereof.

Optionally, the chip may further include a memory. The memory stores instructions. The processor is configured to execute the instructions stored in the memory or other instructions. When the instructions are executed, the processor is configured to implement the method according to any one of the first to the fourth aspects or any possible implementation thereof.

### BRIEF DESCRIPTION OF DRAWINGS

FIG. 1 is a schematic flowchart of a data transmission method according to an embodiment of this application;
FIG. 2 shows a specific example of data transmission according to an embodiment of this application;
FIG. 3 shows an example of data transmission according to an embodiment of this application;
FIG. 4 shows an example of data transmission according to an embodiment of this application;
FIG. 5 shows an example of a BSR according to an embodiment of this application;
FIG. 6 shows an example of a BSR according to an embodiment of this application;
FIG. 7 is a schematic flowchart of a data transmission method according to an embodiment of this application;
FIG. 8 is a schematic block diagram of a communications apparatus according to an embodiment of this application;
FIG. 9 is a schematic block diagram of another communications apparatus according to an embodiment of this application;
FIG. 10 is a schematic block diagram of still another communications apparatus according to an embodiment of this application; and
FIG. 11 is a schematic block diagram of a terminal device according to an embodiment of this application.

### DESCRIPTION OF EMBODIMENTS

The following describes technical solutions in this application with reference to the accompanying drawings.

The technical solutions in the embodiments of this application may be used in various communications systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications (universal mobile telecommunication system, UMTS) system, a worldwide interoperability for microwave access (worldwide interoperability for microwave access, WiMAX) communications system, and a future 5th generation (5th generation, 5G) system or new radio (new radio, NR) system.

A terminal device in embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a future 5G network, or a terminal device in a future evolved public land mobile network (public land mobile network, PLMN). This is not limited in the embodiments of this application.

A network device in the embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a future 5G network, a network device in a future evolved PLMN, or the like. This is not limited in the embodiments of this application.

In a wireless communications system, data packets are sequentially transmitted at an access layer. That is, data packets are delivered, on a transmitter side, from an access layer to an application layer in a same sequence as that for the data packets to be delivered, on a receiver side, from the application layer to the access layer. When data is transmitted at an access layer, radio resource allocation depends on the network device regardless of uplink or downlink. For downlink, the network device determines a radio resource occupied by a data packet, and sends the data packet to a terminal device. For uplink, after a data packet is delivered from an application layer of the terminal device side to an access layer, the terminal device side sends a buffer status report (buffer status report, BSR) to the network device, to notify the network device of a data amount, for example, a quantity of bytes (byte) or data to be sent.

After receiving the BSR, the network device allocates an appropriate quantity of radio resources to the terminal device, and the terminal device transmits data to the network device by using the radio resource. In an actual communications system, the network device may simultaneously receive BSRs of a plurality of terminal devices, but radio resources are limited. Therefore, the network device determines, based on information such as an importance degree and an urgency level of a service of the terminal device, terminal devices to which resources are first allocated and the other terminal devices to which resources are then allocated. After the terminal device sends the BSR, the network device learns of an amount of to-be-sent data of the terminal device, and does not necessarily allocate a radio resource to the terminal device for one time, but may allocate a radio resource to the terminal device at a plurality of times.

Specifically, in an implementation, the terminal device uses the radio resource allocated by the network device to transmit all data packets in a buffer at a time, that is, the terminal device assembles all the data packets into one transport block and transmits the transport block at a time. In this way, all the data packets are successfully transmitted, or all the data packets are unsuccessfully transmitted. If transmission is unsuccessful and a receiver does not receive any data packet within a period of time, a manipulator of the receiver may be deadlocked.

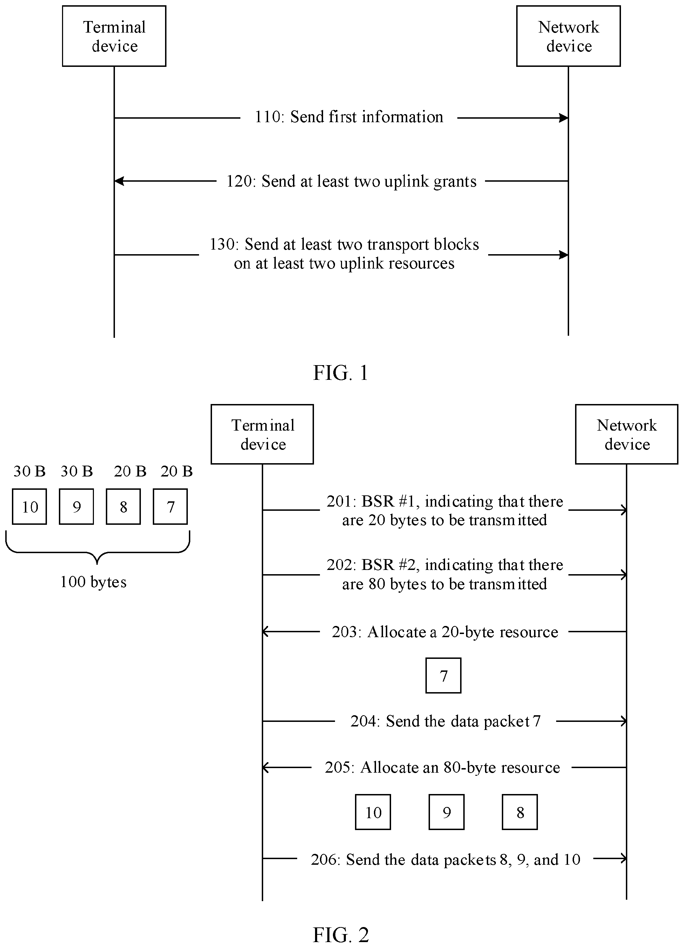

FIG. 1 is a schematic flowchart of a data transmission method according to an embodiment of this application. To prevent production equipment from entering a deadlock state, continuous packet loss needs to be prevented as much as possible in a wireless communications network. According to this embodiment of this application, a terminal device may notify a network device of related information of to-be-sent data packet, so that the network device can send at least two uplink grants to the terminal device. In this case, the terminal device may assemble the to-be-sent data packet into at least two transport blocks, and separately send the at least two transport blocks to the network device by using uplink resources indicated by the at least two uplink grants, to reduce a probability that the terminal device transmits the to-be-sent data packet at a time, thereby reducing continuous packet loss.

It should be understood that, in FIG. 1, the data transmission method is described by using an example in which the data transmission method is performed by a terminal device and a network device. As an example instead of a limitation, the data transmission method may alternatively be performed by a chip of a corresponding terminal device and a chip of a corresponding network device.

The data transmission method in FIG. 1 includes steps 110 to 130.

110: The terminal device sends first information to the network device, where the first information is used to indicate that at least two uplink grants are required for a to-be-sent data packet of the terminal device, or the first information is used to determine that at least two uplink grants are required for a to-be-sent data packet of the terminal device.

Correspondingly, the network device receives the first information, and allocates, based on the first information, the at least two uplink resources for the to-be-sent data packet.

Specifically, the first information is used to indicate that the at least two uplink grants are required for the to-be-sent data packet of the terminal device. For example, the terminal device notifies the network device of a quantity of uplink grants required for the to-be-sent data packet in a buffer of the terminal device. In other words, in this case, the terminal device determines that at least two uplink grants are required for the to-be-sent data packet, and notifies the network device. Then, the network device allocates, based on the first information, the at least two uplink resources for the to-be-sent data packet of the terminal device, and sends grant information of the at least two uplink resources (that is, the at least two uplink grants) to the terminal device.

When the first information is used to determine that the at least two uplink grants are required for the to-be-sent data packet of the terminal device, the network device may determine, based on the first information, that the at least two uplink grants are required for the to-be-sent data packet of the terminal device. Then, the network device allocates the at least two uplink resources for the to-be-sent data packet of the terminal device, and sends grant information of the at least two uplink resources (that is, the at least two uplink grants) to the terminal device.

120: The network device sends the at least two uplink grants to the terminal device.

Specifically, the network device may send configuration information to the terminal device, and the configuration information is used to configure the at least two uplink grants. Correspondingly, the terminal device receives the configuration information from the network device, determines the at least two uplink grants based on the configuration information, and further determines the uplink resources indicated by the at least two uplink grants.

130: The terminal device assembles the to-be-sent data packet into at least two transport blocks, and separately sends the at least two transport blocks to the network device by using the uplink resources that are indicated by the at least two uplink grants and that are allocated by the network device.

The at least two transport blocks are in a one-to-one correspondence with the uplink resources indicated by the at least two grants. To be specific, each transport block corresponds to an uplink resource indicated by one uplink grant, and is transmitted by using the corresponding uplink resource.

Correspondingly, the network device receives the at least two transport blocks on the at least two uplink resources.

Therefore, according to this embodiment of this application, the terminal device may indicate, to the network device, that the at least two uplink grants are required for the to-be-sent data packet; or the terminal device sends, to the network device, indication information used to determine that the at least two uplink grants are required for the to-be-sent data packet, so that the network device sends the at least two uplink grants for the to-be-sent data packet. Then, the terminal device assembles the to-be-sent data packet into the at least two transport blocks, and sends the at least two transport blocks to the network device by using the uplink resources indicated by the at least two uplink grants. In this way, the to-be-sent data packet is not transmitted at a time, thereby reducing a probability of continuous packet loss.

In this embodiment of this application, when there is a to-be-sent data packet in the buffer of the terminal device, the terminal device may send a buffer status report BSR to the network device, to notify the network device of a data amount of the to-be-sent data packet in the buffer of the terminal device. Specifically, when a new to-be-sent data packet is added to the buffer of the terminal device, BSR sending may be triggered. Alternatively, the terminal device may be configured to periodically perform BSR sending. Alternatively, the terminal device may trigger BSR sending when the terminal device needs to request a radio resource for the to-be-sent data packet in the buffer. Specifically, for the BSR, refer to descriptions in a conventional technology. Details are not described herein.

In a possible implementation, when a new to-be-sent data packet with a relatively high priority (for example, higher than a preset priority) is added to the buffer of the terminal device, the terminal device may trigger BSR sending. In this case, if the buffer of the terminal device still includes an originally existing to-be-sent data packet, to-be-sent data packets indicated by a BSR sent by the terminal device may include the to-be-sent data packet that originally exists in the buffer.

Herein, a priority of the to-be-sent data packet that originally exists in the buffer may be higher than the preset priority, or may be lower than the preset priority. This is not specifically limited in this embodiment of this application. Alternatively, the terminal device has sent a BSR corresponding to the to-be-sent data packet that originally exists in the buffer, or the terminal device has not sent a BSR corresponding to the to-be-sent data packet that originally exists in the buffer. This is not specifically limited in this embodiment of this application.

For example, when there are 100 to-be-sent data packets in the buffer of the terminal device, and BSRs have been sent for the 100 to-be-sent data packets, to indicate data amounts of the 100 to-be-sent data packets. Subsequently, 10 new to-be-sent data packets are added to the buffer of the terminal device, and priorities of the 10 to-be-sent data packets are relatively high. In this case, the 10 to-be-sent data packets trigger the terminal device to send BSRs. In this case, the BSRs sent by the terminal device may be used to indicate data amounts of the 110 to-be-sent data packets in the buffer of the terminal device.

Optionally, in this embodiment of this application, that the terminal device sends first information to the network device includes:

The terminal device sends at least two BSRs to the network device, where each of the at least two BSRs is used to indicate a data amount of a to-be-sent data packet corresponding to the BSR.

In other words, in this embodiment of this application, the first information may include the at least two BSRs, and a quantity of the at least two BSRs may be equal to a quantity of the at least two required uplink grants.

That the terminal device sends at least two BSRs to the network device may include the following case: The terminal device sends the at least two BSRs to the network device when a data amount in the buffer does not change after BSR triggering. In other words, when the terminal device satisfies a condition for BSR triggering, the terminal device triggers at least two BSRs, and requests, from the network device by using the at least two BSRs, a resource required by the data amount in the buffer. Compared with that only one BSR is triggered in the conventional technology, in this solution, at least two uplink grants may be obtained, and a data packet in the buffer is sent by using at least two transport blocks. In this way, a probability of loss caused by at least two transport blocks is reduced compared with that caused by one transport block in the conventional technology, and a probability of production equipment entering a deadlock state is reduced. As an example, the foregoing example is still used. After the 10 newly added to-be-sent data packets with relatively high priorities trigger the terminal device to send the BSRs, the terminal device may send three BSRs to the network device. The first BSR may be used to indicate data amounts of first 40 to-be-sent data packets in the buffer, the second BSR may be used to indicate data amounts of 30 to-be-sent data packets following the first 40 to-be-sent data packets in the buffer, and the third BSR may be used to indicate data amounts of the last 40 to-be-sent data packets in the buffer. In addition, in a process of sending the three BSRs, a quantity of the to-be-sent data packets in the buffer does not change, that is, the quantity does not increase or decrease, and no new BSR is triggered (that is, no BSR is triggered by addition of a new data packet).

If a data amount in the buffer changes after BSR triggering, for example, when a new to-be-sent data packet with a relatively high priority is added, a new BSR may be triggered. Alternatively, a new BSR may be triggered after the at least two BSRs are sent. After the first BSR in the at least two BSRs is sent, if the to-be-sent data packet in the buffer is not completely reported in the BSR when BSR sending is triggered, a BSR triggering state is retained, and the BSR triggering state is ended only when the entire to-be-sent data packet in the buffer is reported in the BSR. As an example, the foregoing example is still used. The BSR triggering state is ended only after the first BSR, the second BSR, and the third BSR are sent.

FIG. 2 shows a specific example of data transmission according to an embodiment of this application. As shown in FIG. 2, there are four to-be-sent data packets, namely, data packets 7, 8, 9, and 10, in the buffer of the terminal device, and sizes of the data packets are 20 bytes (bytes), 20 bytes, 30 bytes, and 30 bytes. A method shown in FIG. 2 includes steps 201 to 206.

201: The terminal device sends a BSR #1 to the network device, where the BSR #1 is used to indicate that a data amount of a to-be-sent data packet of the terminal device is 20 bytes, that is, the terminal device has 20 bytes to transmit.

202: The terminal device sends a BSR #2 to the network device, where the BSR #2 is used to indicate that a data amount of a to-be-sent data packet of the terminal device is 80 bytes, that is, the terminal device has 80 bytes to transmit.

In other words, the terminal device sends the two BSRs, the BSR #1 in step 201 and the BSR #2 in step 202, to the network device.

203: The network device configures a 20-byte uplink resource for the terminal device.

Specifically, the network device sends an uplink grant to the terminal device, and the uplink grant indicates the 20-byte uplink resource.

204: The terminal device sends the data packet 7 by using the uplink resource indicated by the uplink grant sent by the network device in step 203.

205: The network device configures an 80-byte uplink resource for the terminal device.

Specifically, the network device sends an uplink grant to the terminal device, and the uplink grant indicates the 80-byte uplink resource.

206: The terminal device sends the data packets 8, 9, and 10 by using the uplink resource indicated by the uplink grant sent by the network device in step 205.

The data packets are transmitted in sequence at an access layer. That is, the data packets are delivered from an access layer to an application layer on the network device side in a same sequence as the data packets are delivered from the application layer to an access layer on the terminal device side. It can be learned that, when the data packets are delivered from the application layer to the access layer in a sequence of 7, 8, 9, and 10, after determining the 20-byte uplink resource in step 203, the terminal device first sends the data packet 7 in step 204. After determining the 80-byte uplink resource in step 205, the terminal device sequentially sends the data packets 8, 9, and 10.

In addition, there is no requirement on a sequence between step 201 and step 202. The BSR #2 may be sent first, and then the BSR #1 is sent. A sequence between step 203 and step 205 is not limited. The resource in step 205 may be allocated first, and then the resource in step 203 is allocated. In addition, a quantity of BSRs is not limited, and a size of a resource required by each BSR is not limited either. For example, three BSRs may be generated, and resources of 20 bytes, 20 bytes, and 60 bytes, or resources of 20 bytes, 50 bytes, and 30 bytes are required separately. Alternatively, four BSRs may be generated, and resources of 20 bytes, 20 bytes, 30 bytes, and 30 bytes are required separately.

Therefore, according to this embodiment of this application, after BSR triggering, the terminal device may send at least two BSRs to the network device, to notify the network device that at least two uplink grants are required, so that the network device sends the at least two uplink grants for the to-be-sent data packet. Then, the terminal device assembles the to-be-sent data packet into at least two transport blocks, and sends the at least two transport blocks to the network device by using uplink resources indicated by the at least two uplink grants, to reduce a probability that the to-be-sent data packet is transmitted at a time, thereby reducing a probability of continuous packet loss.

Optionally, in this embodiment of this application, the terminal device may determine, based on quantity information and/or time information of the to-be-sent data packet in the buffer, a quantity of BSRs to be sent.

Herein, the quantity information may indicate a quantity of to-be-sent data packets, and the time information may include an arrival time, a validity time, a survival time, or other time information of the to-be-sent data packet. This is not limited in this embodiment of this application. The arrival time of the to-be-sent data packet is a time at which the to-be-sent data packet arrives at an access layer of the terminal device, and the validity time is a specified time period, and the data packet needs to be transmitted to a receiver within the specified time period. The survival time is a preset time period, and if the receiver does not receive any packet within the preset time period, the receiver enters a deadlock state.

Implementation 1: The terminal device determines, based on a data amount of the to-be-transmitted data packet in the buffer, a quantity of BSRs for reporting.

For example, the terminal device receives three data packets, and sizes of the three data packets are 50 bytes, 20 bytes, and 40 bytes. To ensure that at least one of the three data packets is successfully transmitted, the terminal device reports the data amounts of the three data packets by using two BSRs, so that the network device allocates two or more uplink resources for transmitting the three uplink data packets. Because the first packet is larger, and the other two packets are smaller, the terminal device determines to report the data amount of the first data packet by using one BSR, and report the data amounts of the second data packet and the third data packet by using the other BSR, so that sizes of the uplink resources allocated by the network device are relatively equal.

Implementation 2: The terminal device determines, based on the arrival time of the to-be-transmitted data packet in the buffer, a quantity of BSRs for reporting.

For example, the terminal device receives three data packets, and the three data packets arrive at the access layer of the terminal device respectively at 00 s:00 ms:00 µs, 00 s:00 ms:02 µs, and 00 s:00 ms:07 µs. To ensure that at least one of the three data packets is successfully transmitted, the terminal device reports data amounts of the three data packets by using two BSRs, so that the network device allocates two or more uplink resources for transmitting the three uplink data packets. Because the arrival times of the first two packets are relatively close, and intervals between the arrival time of the third packet and those of the first two packets are relatively large, the terminal device reports the data amounts of the first data packet and the second data packet by using one BSR, and reports the data amount of the third data packet by using the other BSR.

Implementation 3: The terminal device determines, based on the validity time of the to-be-transmitted data packet in the buffer, a quantity of BSRs for reporting.

For example, three data packets are received at the access layer of the terminal device. The first data packet is received at 00 s:00 ms:00 µs, and a valid time is 00 s:00 ms:600 µs. The second data packet is received at 00 s:00 ms:100 µs, and a valid time is 00 s:00 ms:400 µs. The third data packet is received at 00 s:00 ms:150 µs, and a valid time is 00 s:00 ms:600 µs. The terminal device learns that both a validity time of the first data packet and a validity time of the third data packet are 600 µs, and a validity time of the second data packet is 400 µs. Therefore, the terminal device reports data amounts of the three data packets by using two BSRs. The data amount of the second data packet is reported by using one B SR, and the data amounts of the first data packet and the third data packet are reported by using the other BSR.

Implementation 4: The terminal device determines, based on the survival time of the to-be-transmitted data packet in the buffer, a quantity of BSRs for reporting.

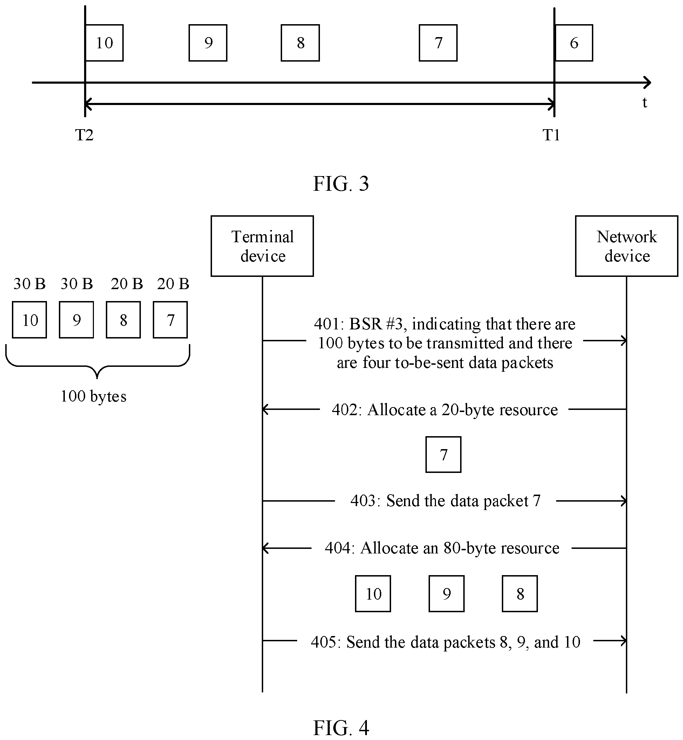

FIG. 3 is used as an example. A time at which a data packet 6 arrives at the network device side is T1, there are data packets 7, 8, 9, and 10 in the buffer of the terminal device, and a time at which the data packet 10 is required to arrive at the network device side is T2. However, an interval between T1 and T2 is excessively large, for example, longer than a "survival time". If a transport block including the data packets 7, 8, 9, and 10 arrives at the moment T2, a survival timer on the network device side expires. In this case, the terminal device may report the data packets 7, 8, 9, and 10 by using a plurality of BSRs. A data amount of the data packet 7 is reported by using one BSR, and data amounts of the data packets 8, 9, and 10 are reported by using the other BSR.

Optionally, that the terminal device sends first information to the network device includes: The terminal device sends first indication information to the network device, where the first indication information is used to indicate a quantity of to-be-sent data packets, and the quantity of to-be-sent data packets is used to determine whether the at least two uplink grants are required for the to-be-sent data packet of the terminal device. In other words, in this case, the first information is the first indication information, and may be specifically used to indicate the quantity of to-be-sent data packets. The network device may determine, based on the obtained quantity of to-be-sent data packets, that at least two uplink resources are required for the to-be-sent data packet.

Specifically, when sending a BSR to the network device, the terminal device not only reports the data amount of the to-be-sent data packet in the buffer, but also reports the quantity of to-be-sent data packets, so that the network device can determine, based on the quantity of to-be-sent data packets, a quantity of uplink resources allocated to the terminal device. For example, if the quantity of to-be-sent data packets is greater than a preset value, the network device may determine to send at least two uplink grants to the terminal device, that is, allocate at least two radio resources for the to-be-sent data packet.

In this embodiment of this application, the quantity of to-be-sent data packets may be a quantity of all to-be-sent data packets in the buffer, or may be a quantity of to-be-sent consecutive data packets in the buffer. If there are a plurality of segments of consecutive data packets, the quantity of to-be-sent consecutive data packets is a quantity of consecutive data packets of the longest segment or a quantity of consecutive data packets of the first segment. Herein, consecutive data packets refer to data packets that enter the buffer in sequence, for example, the data packets 6, 7, 8, 9, and 10 described above.

Specifically, when the terminal device indicates a quantity of consecutive data packets to the network device, and the network device allocates at least two radio resources for the consecutive data packets, the terminal device may assemble the segment of consecutive data packets into two transport blocks, and send the two transport blocks to the network device by using the radio resources allocated by the network device.

FIG. 4 shows a specific example of data transmission according to an embodiment of this application. As shown in FIG. 4, there are four to-be-sent data packets, namely, data packets 7, 8, 9, and 10, in the buffer of the terminal device, and sizes of the data packets are respectively 20 bytes (bytes), 20 bytes, 30 bytes, and 30 bytes. A method shown in FIG. 2 includes steps 401 to 405.

401: The terminal device sends a BSR #3 to the network device, where the BSR #3 is used to indicate that a data amount of a to-be-sent data packet of the terminal device is 100 bytes, that is, the terminal device has 100 bytes to transmit. In addition, the BSR #3 is further used to indicate that a quantity of to-be-sent data packets is 4.

Correspondingly, the network device receives the BSR #3, and allocates at least two radio resources to the terminal device based on the data amount and a quantity of to-be-sent data packets that are indicated by the BSR #3. For example, two radio resources are allocated. One 20-byte uplink resource and one 80-byte uplink resource are used as an example.

402: The network device configures the 20-byte uplink resource for the terminal device.

Specifically, the network device sends an uplink grant to the terminal device, and the uplink grant indicates the 20-byte uplink resource.

403: The terminal device sends the data packet 7 by using the uplink resource indicated by the uplink grant sent by the network device in step 402.

404: The network device configures the 80-byte uplink resource for the terminal device.

Specifically, the network device sends an uplink grant to the terminal device, and the uplink grant indicates the 80-byte uplink resource.

405: The terminal device sends the data packets 8, 9, and 10 by using the uplink resource indicated by the uplink grant sent by the network device in step 404.

In addition, a sequence between step 402 and step 404 is not limited. The resource in step 404 may be allocated first, and then the resource in step 402 is allocated. In addition, a quantity of BSRs is not limited, and a size of a resource required by each BSR is not limited either. For example, three BSRs may be generated, and resources of 20 bytes, 20 bytes, and 60 bytes, or resources of 20 bytes, 50 bytes, and 30 bytes are required separately. Alternatively, four BSRs may be generated, and resources of 20 bytes, 20 bytes, 30 bytes, and 30 bytes are required separately.

Therefore, according to this embodiment of this application, the terminal device may indicate the data amount of the to-be-sent data packet to the network device, so that the network device determines, based on the quantity of to-be-sent data packets, that at least two uplink grants are required for the to-be-sent data packet, and sends the at least two uplink grants for the to-be-sent data packet. Then, the terminal device assembles the to-be-sent data packet into at least two transport blocks, and sends the at least two transport blocks to the network device by using uplink resources indicated by the at least two uplink grants, to reduce a probability that an entire to-be-sent data packet in the buffer is transmitted at a time, thereby reducing a probability of continuous packet loss.

Optionally, the indication information may be carried in a MAC CE. In an implementation, the indication information is carried in a BSR in the MAC CE. In another implementation, the indication information is separately carried in the MAC CE.

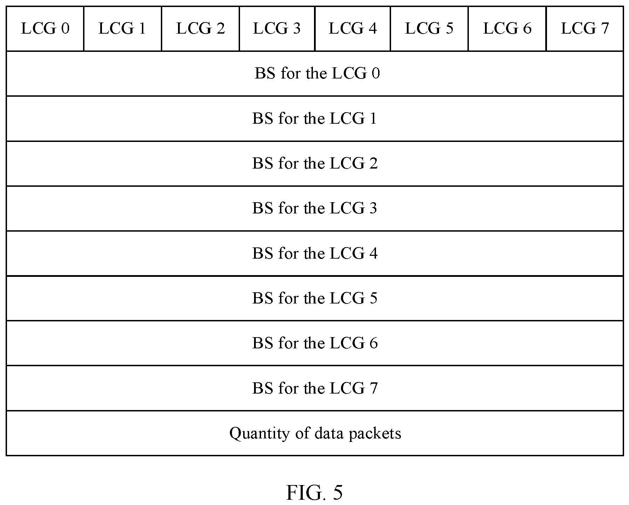

Specifically, when the indication information is carried in a BSR, in a possible implementation, a field may be directly added to the BSR, where the field is used to explicitly indicate a quantity of to-be-sent data packets indicated by the BSR. FIG. 5 shows a specific example of the BSR. The BSR includes fields LCG 0 to LCG 7. The fields LCG 0 to LCG 7 are respectively used to indicate eight logical channel groups of a terminal device. The BSR further includes a BS for the LCG 0 (BS for LCG0), and a BS for the LCG 1 (BS for LCG1), a BS for the LCG 2 (BS for LCG2), a BS for the LCG 3 (BS for LCG3), a BS for the LCG 4 (BS for LCG4), a BS for the LCG 5 (BS for LCG5), a BS for the LCG 6 (BS for LCG6), and a BS for the LCG 7 (BS for LCG7). The fields LCG 0 to LCG 7 are respectively used to indicate whether data amounts of the logical channels corresponding to the LCG 0 to the LCG 7 are included in the BSR, and the BSs for the LCG 0 to the LCG 7 are respectively used to indicate fields of a data packet quantity of the logical channels corresponding to the LCG 0 to the LCG 7. For example, when a value of an LCG i is 0, it is indicated that a BS for the LCG i is not included in the BSR; or when a value of an LCG i is 1, it is indicated that a BS for the LCG i is not included in the BSR. That is, the BSs for the LCG 0 to the LCG 7 are optional. The value of the LCG i is used to determine whether the corresponding BS for the LCG i exists, where a value of i ranges from 0 to 7.

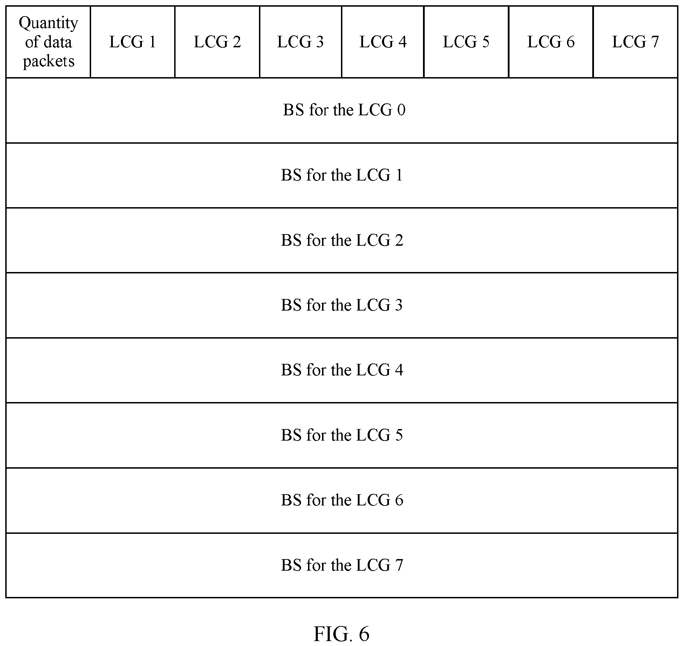

In another possible implementation, an LCG field in the BSR may be reused to indicate the quantity of to-be-sent data packets. Specifically, in this case, it may be implicitly indicated that at least two uplink grants are required for the to-be-sent data packet of the terminal device. For example, a bit in an LCG may be used for implicit indication, for example, the LCG 0 in FIG. 6. For example, if a value of the bit is 0, it is indicated that the terminal device may use one radio resource to transmit all the to-be-sent data packets in the buffer; or if a value of the bit is 1, it is indicated that the terminal device expects to use two or more radio resources to transmit the to-be-sent data packets in the buffer. The LCG may not be configured for the terminal device. In other words, the terminal device does not have any logical channel corresponding to the LCG 0. Specifically, the network device may use RRC signaling or a MAC CE to configure an LCG indication bit that is reused to indicate the quantity of to-be-sent data packets.

When the indication information is carried in a MAC CE, in a possible implementation, the indication information may be separately carried in the MAC CE. In other words, in this case, the MAC CE includes only the indication information.

Optionally, in this embodiment of this application, the network device may further determine, based on the quantity of to-be-sent data packets and a data pattern (pattern) of the to-be-sent data packet, a quantity of radio resources to be allocated for the to-be-sent data. Herein, the data pattern is used to indicate a transmission policy of the to-be-sent data, a resource allocation manner for the to-be-sent data, or distribution of the to-be-sent data. For example, the data pattern of the terminal device may indicate that one data packet is transmitted every 20 ms.

According to this embodiment of this application, the terminal device may obtain the data pattern from an operation, administration, and maintenance (operation, administration and maintenance, OAM) system, or may obtain the data pattern from a control center, or may report the data pattern by the terminal device. This is not limited in this embodiment of this application.

For example, when the data pattern of the terminal device indicates that one data packet is transmitted every 20 ms, and a survival timer (survival timer) length is 100 ms, if the network device receives the indication information sent by the terminal device, and learns that the terminal device has five data packets to transmit, and the network device allocates one radio resource for the five to-be-sent data packets at a time, a manipulator enters a deadlock state if the five data packets are unsuccessfully transmitted on a radio interface. Therefore, in this case, the network device may allocate two or more radio resources to the terminal device, so that the terminal device may send the five data packets to the network device at two or more times. In this way, the manipulator enters the deadlock state only when all data is unsuccessfully transmitted. That is, even if a part of data packets is unsuccessfully transmitted, the manipulator does not enter the deadlock state.

Optionally, in this embodiment of this application, that the terminal device sends first information to the network device includes:

The terminal device sends two BSRs with same content to the network device. Optionally, the two BSRs with same content may be included in one MAC CE.

In this case, the first information includes the two BSRs with same content. When receiving the two BSRs with exactly same content, the network device may determine that at least two uplink grants are required for the to-be-sent data packet of the terminal device. Herein, BSRs with same content refer to BSRs that are exactly the same, that is, information indicated by the two BSRs is exactly the same. It should be noted that, in this embodiment of this application, the MAC CE may alternatively include three or more BSRs with same content, to indicate that at least two uplink grants are required for the to-be-sent data packet of the terminal device.

Optionally, in this embodiment of this application, that the terminal device notifies the network device of a quantity of the at least two uplink resources required for the to-be-sent data includes:

The terminal device determines a threshold, where the threshold indicates an upper limit of an amount of data transmitted by using the uplink resources.

When the terminal device requires the at least two uplink grants, the terminal device sends second indication information to the network device, where the second indication information is used to indicate that the data amount of the to-be-sent data packet is greater than or equal to the threshold.

Correspondingly, that the network device determines that the to-be-sent data amount is greater than or equal to the threshold may include two cases: One case is that the to-be-sent data amount of the terminal is actually greater than or equal to the threshold, and the other case is that the to-be-sent data amount of the terminal is less than the threshold but the terminal requires two or more uplink resources. The network device can configure at least two uplink grants for the terminal device in both of the two cases.

Herein, the threshold may be configured by the network device or specified in a protocol. This is not limited in this embodiment of this application. For example, the threshold may be 500 bytes.

Specifically, when the data amount of the to-be-sent data packet is less than or equal to the threshold, the terminal device may indicate, to the network device, that the data amount of the to-be-sent data packet is greater than or equal to the threshold. In this case, the "indication" is not a real indication, but an "indication" for the network device to allocate at least two uplink resources to the terminal device. In other words, the "indication" is used to indicate the network device to ignore an actual to-be-sent data amount.

Alternatively, when the data amount of the to-be-sent data packet is greater than the threshold, the terminal device may indicate, to the network device, that the data amount of the to-be-sent data packet is greater than the threshold.

In a possible implementation, the terminal device may send a "threshold" to the network device, to indicate that the data amount of the to-be-sent data packet is greater than the threshold. Alternatively, the terminal device may send other indication information to the network device, to indicate that the data amount of the to-be-sent data packet is greater than the threshold. This is not limited in this embodiment of this application.

Therefore, according to this embodiment of this application, the terminal device may indicate, to the network device, that the at least two uplink grants are required for the to-be-sent data packet; or the terminal device sends, to the network device, indication information used to determine that the at least two uplink grants are required for the to-be-sent data packet, so that the network device sends the at least two uplink grants for the to-be-sent data packet. Then, the terminal device assembles the to-be-sent data packet into the at least two transport blocks, and sends the at least two transport blocks to the network device by using the uplink resources indicated by the at least two uplink grants, to reduce a probability that the to-be-sent data packet is transmitted at a time, thereby reducing continuous packet loss.

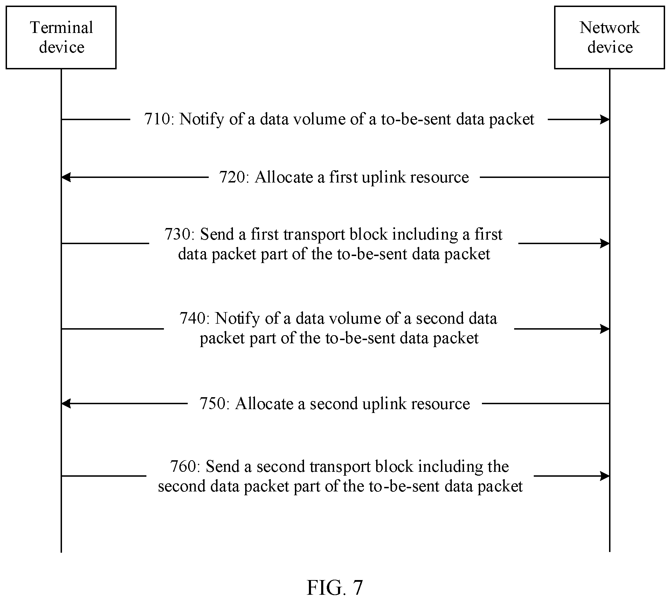

FIG. 7 is a schematic flowchart of a data transmission method according to an embodiment of this application. To prevent production equipment from entering a deadlock state, a wireless communications network should prevent continuous packet loss as much as possible. In this embodiment of this application, when a terminal device determines that a deadlock may occur when a plurality of data packets are transmitted by using one transport block, the terminal device may transmit the data packets at two or more times, thereby reducing a probability that the data packets are transmitted at a time and reducing continuous packet loss.

It should be understood that, in FIG. 7, the data transmission method is described by using an example in which the data transmission method is performed by the terminal device and a network device. As an example instead of a limitation, the data transmission method may alternatively be performed by a chip of the corresponding terminal device and a chip of the corresponding network device.

It should be further understood that FIG. 7 shows steps or operations of the data transmission method, but the steps or operations are merely examples. In this embodiment of this application, other operations or variations of the operations in FIG. 7 may be further performed. In addition, the steps in FIG. 7 may be performed in a sequence different from that presented in FIG. 1, and possibly, not all the operations in FIG. 7 are necessarily performed.

The data transmission method in FIG. 7 includes 710 to 760.

710: The terminal device notifies the network device of a data amount of a to-be-sent data packet.

Specifically, the terminal device may send a BSR #4 to the network device, where the BSR #4 is used to notify the data amount of the to-be-sent data packet in a buffer of the terminal device.

720: The network device allocates a first uplink resource to the terminal device. Specifically, the network device may send a first uplink grant to the terminal device based on the BSR #4, to indicate the first uplink resource.

730: The terminal device assembles a first data packet part of the to-be-sent data packet into a first transport block, and sends the first transport block to the network device by using the uplink resource allocated by the network device for the to-be-sent data packet.

740: the terminal device notifies the network device of a data amount of a second data packet part of the to-be-sent data packet.

750: The network device allocates a second uplink resource to the terminal device. Specifically, the network device may send a second uplink grant to the terminal device, to indicate the second uplink resource. The network device may allocate the second uplink resource based on the data amount of the second data packet part.

760: The terminal device assembles the second data packet part into a second transport block, and sends the second transport block to the network device by using the uplink resource allocated by the network device for the second data packet part.

### Case 1:

Specifically, when the terminal device determines to transmit a plurality of to-be-sent data packets by using one transport block, a deadlock may occur. In this case, in a possible implementation, the terminal device may transmit the plurality of to-be-sent data packets at a plurality of (at least two) times. In this case, the first data packet part in 730 is a part of the plurality of to-be-sent data packets, that is, a part of the to-be-sent data packet in 710. For example, the first data packet part may be first several data packets of the to-be-sent data packets. In this case, the terminal device and the network device may perform 730 to 760, that is, a BSR #5 may be sent to the network device. The BSR #5 is used to notify a data amount of a to-be-sent data packet in a current buffer of the terminal device, that is, the second data packet part. It should be noted that in this case, the to-be-sent data packet (that is, the second data packet part) in the current buffer of the terminal device is a part of the to-be-sent data packet in step 710. For example, the second data packet part may be several data packets after the first data packet part in 730.

The terminal device may put the BSR #5 in the first transport block and send the first transport block to the network device. Alternatively, the terminal device may trigger BSR sending, and then send the BSR #5 to the network device. Alternatively, after sending the first transport block, the terminal device does not cancel BSR triggering, retains a BSR triggering state, and then sends the BSR #5 to the network device.

It should be understood that, in this embodiment of this application, the terminal device may transmit the to-be-sent data packet in 710 to the network device at least twice. Therefore, the terminal device and the network device may perform 740 to 760 once, twice, or for a plurality of times. This is not limited in this embodiment of this application.

In a specific example, there are four to-be-transmitted data packets in the buffer of the terminal device that are data packets 7, 8, 9, and 10. When the terminal device determines to transmit the four data packets by using one transport block, a deadlock may occur. In this case, the terminal device may put the three data packets 7, 8, and 9 in a transport block. Then, the terminal device may further put a BSR in the transport block, to indicate that the terminal device still has a 30-byte data packet to transmit. When receiving the transport block, the network device can obtain the BSR. In this way, the network device may continue to allocate a radio resource to the terminal device to transmit the data packet 10.

### Case 2:

When the terminal device determines to transmit a plurality of to-be-sent data packets by using one transport block, a deadlock may occur. In this case, in another possible implementation, the terminal device may put the plurality of to-be-sent data packets in the transport block for transmission. In this case, the first data packet part in 730 is all of the plurality of to-be-sent data packets, that is, the entire to-be-sent data packet in 710. In this case, the terminal device may consider that a part of the plurality of to-be-sent data packets, for example, the second data packet part, is not sent. In this case, the first data packet part includes the second data packet part.

After the first transport block in 730 is sent, the terminal device may trigger sending of a BSR #6, where the BSR #6 is used to notify the terminal device of the data amount of the second data packet part. Alternatively, after sending the first transport block in 730, the terminal device does not cancel BSR triggering, retains a BSR triggering state, and then sends the BSR #6 to the network device. In this way, the network device may allocate a next radio resource to the terminal device based on the BSR #6. In this case, when there is a radio resource next time, if the terminal device does not determine that the first transport block in 730 is successfully transmitted, the terminal device sends the second data packet part to the network device by using the next radio resource.

If after triggering the BSR #6 but before receiving an uplink grant sent by the network device, the terminal device determines that the first transport block in 730 is already successfully transmitted, the terminal device cancels triggering of the BSR #6, and therefore does not transmit the second data packet part to the network device by using the next radio resource.

Alternatively, before transmitting by using a next radio resource, if the terminal device determines that the first transport block in 730 is already successfully transmitted, the terminal device does not transmit the second data packet part to the network device by using the next radio resource.

In a specific example, there are four to-be-sent data packets in the buffer of the terminal device that are data packets 7, 8, 9, and 10. When the terminal device determines to transmit the four data packets by using one transport block, a deadlock may occur. In this case, the terminal device may still put the four data packets in the transport block, but the terminal device considers that the data packet 10 has not been transmitted. After the terminal device sends the transport block, the terminal device may trigger a BSR to indicate that the terminal device still has a 30-byte data packet to transmit, to request a next radio resource. If the terminal device acknowledges that the transport block is successfully transmitted, the terminal device may cancel triggering of the BSR.

If the transport block has not been acknowledged to be successfully transmitted when a radio resource is allocated next time, the terminal device still transmits the data packet 10 to the network device by using the next radio resource. If the terminal device has acknowledged that the data packet is successfully transmitted when a radio resource is allocated next time, the terminal device may not transmit the data packet 10 by using the next radio resource.

Therefore, in this embodiment of this application, when the terminal device determines that a deadlock may occur when a plurality of data packets are transmitted by using one transport block, the terminal device may transmit the data packets at two or more times, thereby reducing a probability that the data packets are transmitted at a time and reducing continuous packet loss.

The foregoing mainly describes, from the perspective of interaction between different devices, the solutions provided in the embodiments of this application. It may be understood that, to implement the foregoing functions, the network device and the terminal device include corresponding hardware structures and/or software modules for implementing the functions. With reference to the units and algorithm steps described in the embodiments disclosed in this application, the embodiments of this application can be implemented in a form of hardware or a combination of hardware and computer software. Whether a specific function is performed by hardware or hardware driven by computer software depends on particular applications and design constraints of the technical solutions. A person skilled in the art may use different methods to implement the described functions for each particular application, but it should not be considered that the implementation goes beyond the scope of the technical solutions of the embodiments of this application.

In this embodiment of this application, division into functional units may be performed on the network device and the terminal device based on the method examples. For example, division into each functional unit may be based on each corresponding function, or two or more than two functions may be integrated into one processing unit. The integrated unit may be implemented in a form of hardware, or may be implemented in a form of a software functional unit. It should be noted that, in the embodiments of this application, division into the units is an example, and is merely a logical function division. In actual implementation, another division manner may be used.

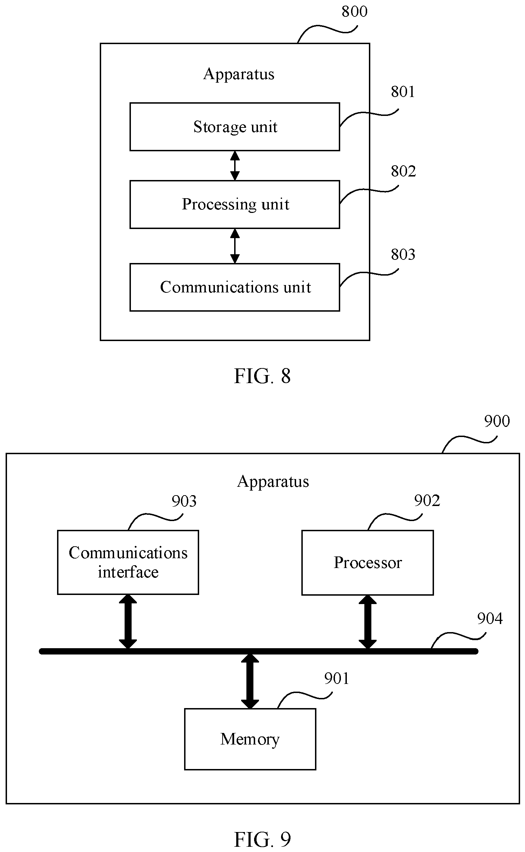

When the integrated unit is used, FIG. 8 is a possible example block diagram of a communications apparatus according to an embodiment of this application. The apparatus 800 may be in a form of software, hardware, or a combination of software and hardware. FIG. 8 is the possible schematic block diagram of the apparatus according to this embodiment of this application. The apparatus 800 includes a processing unit 802 and a communications unit 803. The processing unit 802 is configured to control and manage an action of the apparatus. The communications unit 803 is configured to support communication between the apparatus and another device. The apparatus may further include a storage unit 801, configured to store program code and data of the apparatus.

The apparatus 800 shown in FIG. 8 may be the network device in the embodiments of this application.

When the apparatus 800 shown in FIG. 8 is the network device, the processing unit 802 can support the apparatus 800 in performing an action completed by the network device in the foregoing method examples. For example, the processing unit 802 supports the apparatus 800 in performing an action of processing first information, generating an uplink grant, processing a transport block, and/or another process used for the technology described in this specification. The communications unit 803 can support communication between the apparatus 800 and a terminal device or the like. For example, the communications unit 803 supports the apparatus 800 in performing steps 110, 120, and 130 in FIG. 1, steps 201 to 206 in FIG. 2, steps 401 to 405 in FIG. 4, steps 710 to 760 in FIG. 7, and/or another related communication process.

For example, the processing unit 802 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or a combination thereof. The processor may implement or execute example logical blocks, units, and circuits described with reference to content disclosed in this application. The processor may alternatively be a combination of processors implementing a computing function, for example, a combination of one or more microprocessors or a combination of a DSP and a microprocessor. The communications unit 803 may be a communications interface, and the communications interface is a general term. During specific implementation, the communications interface may include one or more interfaces. The storage unit 801 may be a memory.

When the processing unit 802 is a processor, the communications unit 803 is a communications interface, and the storage unit 801 is a memory, the apparatus 800 in this embodiment of this application may be a communications apparatus 900 shown in FIG. 9.

Referring to FIG. 9, the apparatus 900 includes a processor 902 and a communications interface 903. Further, the apparatus 900 may further include a memory 901. Optionally, the apparatus 900 may further include a bus 904. The communications interface 903, the processor 902, and the memory 901 may be connected to each other by using the bus 904. The bus 904 may be a peripheral component interconnect (Peripheral Component Interconnect, PCI) bus, an extended industry standard architecture (Extended Industry Standard Architecture, EISA for short) bus, or the like. The bus 904 may be classified into an address bus, a data bus, a control bus, or the like. For ease of representation, only one thick line is used to represent the bus in FIG. 9, but this does not mean that there is only one bus or only one type of bus.

The processor 902 may perform various functions of the apparatus 900 by running or performing a program stored in the memory 901.

For example, the communications apparatus 900 shown in FIG. 9 may be the network device in the embodiments of this application.

When the apparatus 900 is the network device, the processor 902 may perform an action completed by the network device in the foregoing method examples by running or performing the program stored in the memory 901.

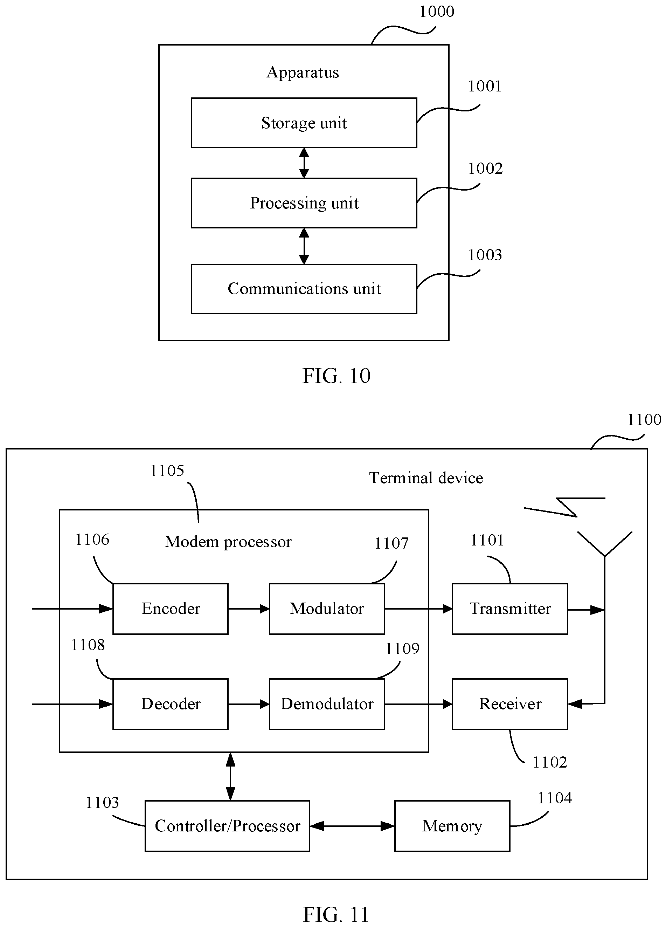

When an integrated unit is used, FIG. 10 is a possible example block diagram of another apparatus according to an embodiment of this application. The apparatus 1000 may be in a form of software, hardware, or a combination of software and hardware. FIG. 10 is the possible schematic block diagram of the apparatus according to this embodiment of this application. The apparatus 1000 includes a processing unit 1002 and a communications unit 1003. The processing unit 1002 is configured to control and manage an action of the apparatus. The communications unit 1003 is configured to support communication between the apparatus and another device. The apparatus may further include a storage unit 1001, configured to store a program code and data of the apparatus.

The communications apparatus 1000 shown in FIG. 10 may be a terminal device, or may be a chip used in the terminal device. The processing unit 1002 can support the apparatus 1000 in performing an action completed by the terminal device in the foregoing method examples, for example, an action of generating first information and a transport block, and/or another process used for the technology described in this specification. The communications unit 1003 can support communication between the apparatus 1000 and a network device or the like. For example, the communications unit 1003 supports the apparatus 1000 in performing steps 110, 120, and 130 in FIG. 1, steps 201 to 206 in FIG. 2, steps 401 to 405 in FIG. 4, steps 710 to 760 in FIG. 7, and/or another related communication process.

For example, the processing unit 1002 may be a processor or a controller, such as a CPU, a general-purpose processor, a DSP, an ASIC, an FPGA, or another programmable logic device, a transistor logic device, a hardware component, or any combination thereof. The processor may implement or execute example logical blocks, units, and circuits described with reference to content disclosed in this application. The processor may alternatively be a combination of processors implementing a computing function, for example, a combination of one or more microprocessors or a combination of a DSP and a microprocessor. The communications unit 1003 may be a communications interface, and the communications interface is a general term. During specific implementation, the communications interface may include one or more interfaces. The storage unit 1001 may be a memory.

When the processing unit 1002 is a processor, the communications unit 1003 is a transceiver, and the storage unit 1001 is a memory, the apparatus 1000 in this embodiment of this application may be a terminal device shown in FIG. 11.

FIG. 11 is a simplified schematic diagram of a possible design structure of the terminal device according to an embodiment of this application. The terminal device 1100 includes a transmitter 1101, a receiver 1102, and a processor 1103. The processor 1103 may alternatively be a controller, and is represented as a "controller/processor 1103" in FIG. 11. Optionally, the terminal device 1100 may further include a modem processor 1105, and the modem processor 1105 may include an encoder 1106, a modulator 1107, a decoder 1108, and a demodulator 1109.

In an example, the transmitter 1101 adjusts (for example, through analog conversion, filtering, amplification, and up-conversion) an output sample and generates an uplink signal. The uplink signal is transmitted to the network device in the foregoing embodiments through an antenna. On a downlink, the antenna receives a downlink signal transmitted by the base station in the foregoing embodiments. The receiver 1102 adjusts (for example, through filtering, amplification, down-conversion, and digitalization) the signal received from the antenna and provides an input sample. In the modem processor 805, the encoder 806 receives service data and a signaling message that are to be sent in an uplink, and processes (for example, through formatting, encoding, and interleaving) the service data and the signaling message. The modulator 1107 further processes (for example, through symbol mapping and modulation) encoded service data and an encoded signaling message, and provides an output sample. The demodulator 1109 processes (for example, through demodulation) the input sample and provides symbol estimation. The decoder 1108 processes (for example, through de-interleaving and decoding) the symbol estimation and provides decoded data and a decoded signaling message that are to be sent to the terminal device 1100. The encoder 1106, the modulator 1107, the demodulator 1109, and the decoder 1108 may be implemented by the composite modem processor 1105. These units perform processing based on a radio access technology (for example, an access technology in LTE, 5G, and another evolved system) used in a radio access network. It should be noted that, when the terminal device 1100 does not include the modem processor 1105, the foregoing function of the modem processor 1105 may alternatively be implemented by the processor 1103.

The processor 1103 controls and manages an action of the terminal device 100, and is configured to perform a processing process performed by the terminal device 1100 in the foregoing embodiments of this application. For example, the processor 1103 is further configured to perform processing processes of the terminal device in the methods shown in FIG. 1, FIG. 2, FIG. 4, and FIG. 7 and/or another process of the technical solutions described in this application.

Further, the terminal device 1100 may further include a memory 1104, and the memory 1104 is configured to store program code and data of the terminal device 1100.

The methods or algorithm steps described in combination with the content disclosed in the embodiments of this application may be implemented by hardware, or may be implemented by a processor executing software instructions. The software instructions may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the field. For example, a storage medium is coupled to a processor, so that the processor can read information from the storage medium and write information into the storage medium. Certainly, the storage medium may be a component of the processor. The processor and the storage medium may be in an ASIC. In addition, the ASIC may be in a control plane entity of a centralized unit, a user plane entity of a centralized unit, a terminal device, or a unified data storage network element. Certainly, the processor and the storage medium may alternatively be discrete components in a control plane entity of a centralized unit, a user plane entity of a centralized unit, a terminal device, or a unified data storage network element.

An embodiment of this application further provides a computer-readable storage medium, including a computer program. When the computer program is run on a computer, the computer is enabled to perform the methods provided in the foregoing method embodiments.

An embodiment of this application further provides a computer program product including instructions. When the computer program product runs on a computer, the computer is enabled to perform the methods provided in the foregoing method embodiments.

An embodiment of this application further provides a chip. The chip may be used in a communications apparatus. The chip includes at least one processor, and when the at least one processor executes instructions, the chip or the communications apparatus is enabled to perform the methods provided in the foregoing method embodiments. The chip may further include a memory, and the memory may be configured to store related instructions.

It should be understood that, the processor mentioned in the embodiments of the present invention may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, discrete gate, or transistor logic device, a discrete hardware component, or the like. The general-purpose processor may be a microprocessor, or the processor may be any conventional processor, or the like.

It should further be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

It should be further understood that first, second, and various numerical numbers in this specification are merely for differentiation for ease of description, but are not intended to limit the scope of this application.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more of computer operating systems implementing service processing by using a process (process), for example, a Linux operating system, a Unix operating system, an Android operating system, an iOS operating system, or a Windows operating system. The application layer includes applications such as a browser, an address book, word processing software, and instant communications software. In addition, a specific structure of an execution body of the methods provided in the embodiments of this application is not specifically limited in the embodiments of this application, provided that a program that records code for the methods provided in the embodiments of this application can be run to perform communication according to the methods provided in the embodiments of this application. For example, the execution body of the methods provided in the embodiments of this application may be a terminal device, a network device, or a functional module that is in a terminal device or a network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the apparatus embodiments described above are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing describes merely specific implementations of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
sending, by a terminal device, first information to a network device, wherein the first information is used to indicate that at least two uplink grants are required for a to-be-sent data packet of the terminal device, or the first information is used to determine that at least two uplink grants are required for a to-be-sent data packet of the terminal device;
receiving, by the terminal device, the at least two uplink grants from the network device; and
assembling, by the terminal device, the to-be-sent data packet into at least two transport blocks, and separately sending the at least two transport blocks to the network device by using uplink resources indicated by the at least two uplink grants.

2. The method according to claim 1, wherein the sending, by a terminal device, first information to a network device comprises:
sending, by the terminal device, at least two buffer status reports BSRs to the network device, wherein each BSR is used to indicate a data amount of a to-be-sent data packet corresponding to the BSR.

3. The method according to claim 1, wherein the sending, by a terminal device, first information to a network device comprises:
sending, by the terminal device, first indication information to the network device, wherein the first indication information is used to indicate a quantity of to-be-sent data packets, and the quantity of to-be-sent data packets is used to determine that the at least two uplink grants are required for the to-be-sent data packet of the terminal device.

4. The method according to claim 3, wherein the first indication information is carried in a MAC CE.

5. The method according to claim 3, wherein the first indication information is carried in a BSR.

6. The method according to claim 1, wherein the sending, by a terminal device, first information to a network device comprises:
sending, by the terminal device, a MAC CE to the network device, wherein the MAC CE comprises two BSRs with same content.

7. The method according to claim 1, wherein the sending, by a terminal device, first information to a network device comprises:
determining, by the terminal device, a threshold, wherein the threshold indicates an upper limit of an amount of data transmitted by using the uplink resources; and
when the terminal device requires the at least two uplink grants, sending, by the terminal device, second indication information to the network device, wherein the second indication information is used to indicate that the data amount of the to-be-sent data packet is greater than or equal to the threshold.

8. A data transmission method, comprising:
receiving, by a network device, first information from a terminal device, wherein the first information is used to indicate that at least two uplink grants are required for a to-be-sent data packet of the terminal device, or the first information is used to determine that at least two uplink grants are required for a to-be-sent data packet of the terminal device;
sending, by the network device based on the first information, the at least two uplink grants to the terminal device; and
receiving, by the network device by using uplink resources indicated by the at least two uplink grants, at least two transport blocks sent by the terminal device.

9. The method according to claim 8, wherein the receiving, by a network device, first information from a terminal device comprises:
receiving, by the network device, at least two buffer status reports BSRs from the terminal device, wherein each BSR is used to indicate a data amount of a to-be-sent data packet corresponding to the BSR; and
the sending, by the network device based on the first information, the at least two uplink grants to the terminal device comprises:
sending, by the network device based on the at least two BSRs, the at least two uplink grants to the terminal device.

10. The method according to claim 8, wherein the receiving, by a network device, first information from a terminal device comprises:
receiving, by the network device, indication information from the terminal device, wherein the indication information is used to indicate a quantity of to-be-sent data packets; and
the sending, by the network device based on the first information, the at least two uplink grants to the terminal device comprises:
sending, by the network device based on the quantity of to-be-sent data packets, the at least two uplink grants to the terminal device.

11. The method according to claim 10, wherein the indication information is carried in a MAC CE.

12. The method according to claim 10 or 11, wherein the sending, by the network device based on the quantity of to-be-sent data packets, the at least two uplink grants to the terminal device comprises:
determining, by the network device based on the quantity of to-be-sent data packets and a data pattern of the to-be-sent data, the at least two uplink grants, wherein the data pattern is used to indicate a transmission policy of the to-be-sent data.

13. The method according to claim 8, wherein the receiving, by a network device, first information from a terminal device comprises:
receiving, by the network device, a MAC CE from the terminal device, wherein the MAC CE comprises two BSRs with same content; and
the sending, by the network device based on the first information, the at least two uplink grants to the terminal device comprises:
sending, by the network device based on the at least two BSRs with the same content in the MAC CE, the at least two uplink grants to the terminal device.

14. The method according to claim 8, wherein the receiving, by a network device, first information from a terminal device comprises:
determining, by the network device, a threshold, wherein the threshold indicates an upper limit of an amount of data transmitted by using the uplink resources; and
receiving, by the network device, second indication information from the terminal device, wherein the second indication information is used to indicate that a quantity of to-be-sent data packets is greater than or equal to the threshold; and
the sending, by the network device based on the first information, the at least two uplink grants to the terminal device comprises:
sending, by the network device based on the second indication information, the at least two uplink grants to the terminal device.

15. A data transmission apparatus, comprising units for performing the method according to any one of claims 1 to 7.

16. A data transmission apparatus, wherein the apparatus comprises a processor, configured to: be connected to a memory, and execute instructions in the memory, to implement the method according to any one of claims 1 to 7.

17. A data transmission apparatus, comprising units for performing the method according to any one of claims 8 to 14.

18. A data transmission apparatus, wherein the apparatus comprises a processor, configured to: be connected to a memory, and execute instructions in the memory, to implement the method according to any one of claims 8 to 14.

19. A terminal device, comprising the apparatus according to claim 15 or 16.

20. A computer-readable storage medium, comprising instructions, wherein when the instructions are run on a computer, the computer is enabled to perform the method according to any one of claims 1 to 14.

21. A communications chip, wherein the communications chip comprises a processor, and when the communications chip is run on a communications apparatus, the processor is configured to read instructions in a memory of the communications apparatus, so that the communications chip performs the method according to any one of claims 1 to 14.
